# EUROPEAN PATENT SPECIFICATION

(11) **EP 2 192 238 B1**
(45) Date of publication and mention of the grant of the patent: **06.06.2012**
(21) Application number: 09176600.6
(22) Date of filing: 20.11.2009
(51) Int. Cl.: E02D 27/42

(54) **A foundation and a method for forming a foundation for a wind turbine tower**
Fundament und Verfahren zur Bildung eines Fundaments für eine Windturbine
Fondation et procédé de formation de fondation pour tour d'éolienne

(30) Priority: 26.11.2008 DK 200801665; 26.11.2008 US 118189 P
(43) Date of publication of application: 02.06.2010
(73) Proprietor: Vestas Wind Systems A/S, 8200 Aarhus N (DK)
(72) Inventor: Kristensen, Jonas, 6900 Skjern (DK)
(74) Representative: Fritsche, Daniel

(56) References cited:
- WO-A2-2007/130667
- US-A- 4 079 559
- US-A1- 2004 131 428

## Description

### Technical field

The present invention generally relates to a foundation for a wind turbine tower. The present invention further relates to a method for forming a foundation for a wind turbine tower, a rock flange for a wind turbine tower, a wind turbine comprising such a foundation, and use of such a foundation in a wind turbine.

### Background of the invention

A wind turbine tower is generally 30-80 m in height and has a diameter of 2-10 m. Typical modern tower weights are 40 tons for a 50 m tower for a turbine with a 44 m rotor diameter (600 kW), and 80 tons for a 60 m tower for a 72 m rotor diameter. Due to the height and weight of the wind turbine tower, forces formed by the rotational movements of the wind turbine blades, and the very large surface of the tower being exposed to the wind, the tower must be steadily fastened to the ground.

Depending on soil conditions, for example rock, soil or gravel, different kinds of foundations are used for securing the wind turbine tower to the ground. One way of forming a foundation on a solid rock is to form a concrete foundation in a cavity, arrange a support structure on the concrete foundation, forming a connection to the tower, and arrange anchors into drilled holes in the rock.

Due to the very large forces that the foundation for the wind turbine tower is exposed to, it is desirable to improve the stability and the rigidity of the foundation. Further, it is desirable that the design of the foundation does not hinder transport of the wind turbine tower, or affect the design of the wind turbine tower.

WO 2005/012651 discloses a reinforced foundation for a wind turbine generator. The foundation comprises a concrete slab, a plurality of tensioned tendons and a plurality of ground anchors. The ground anchors extend in the vertical direction. The tensioned tendons are of two types, straight tendons that extend through the concrete slab in two sets, each extending between opposing faces of the octagonal concrete slab, and arcuate tendons having a semi-circular shape and surrounding the ground anchors. The bottom portion of the tower is attached to a cylindrical can being partly embedded in the concrete slab.

Instead of using a cylindrical portion for connecting the tower to the foundation as in WO 2005/012651, it is known to use a foundation including a concrete foundation formed on the rock, a circular element arranged directly on the concrete foundation, a vertically extending support structure having in its upper part an interface to the tower, and supports extending between the circular element and the support structure, for stabilizing and maintaining the rigidity of the circular element. Similarly to the above-described solution, ground anchors are provided at the inner and outer periphery of the circular element for securing the foundation to the rock. Consequently, the ground anchors are arranged on both sides of the leg.

DK200300203U3 discloses a rock foundation with two sets of anchors, the anchors in one of the sets being parallel to the longitudinal direction of the tower, and the anchors of the other set being angled downwards and outwards. A disadvantage with this arrangement is that it requires, due to the angled anchors, a conical support, which is relatively complicated and therefore expensive to manufacture. Further, US 2004/0 131 428A discloses a foundation according to the preamble of claim 1.

### Summary of the invention

In view of the above, an objective of the invention is to provide an improvement or alternative to the prior-art foundations for wind turbine towers.

In particular, an objective is to provide a foundation for a wind turbine tower providing a more stable support for the wind turbine tower.

A further objective is to provide a foundation not affecting the diameter of the wind turbine tower in view of restrictions due to transport.

A further objective is to provide a more compact foundation for a wind turbine tower.

A further objective is to provide a foundation for a wind turbine tower not requiring any supports.

A still further objective is to reduce the material required for the foundation.

Another objective is to provide a simpler arrangement at a wind turbine foundation.

According to a first aspect, the invention is realized by a foundation for a wind turbine tower, comprising a rock flange having a first set of through anchor holes each arranged to extend in a non-zero first angle to, or parallel to, a longitudinal direction of the wind turbine tower when erected, and a second set of through anchor holes each arranged to extend in a non-zero second angle to the longitudinal direction of the wind turbine tower when erected, wherein the first and second angles are different from each other, and wherein, where the wind turbine tower is erected, upper ends of the anchor holes in the second set of anchor holes are located internally of the foundation.

It is understood that the upper ends of the anchor holes in the second set of anchor holes are located internally of the foundation where the wind turbine tower is erected. The location internally of the foundation means that the anchor hole upper ends are located on an internal side of the tower or a tower support when the turbine is erected. Preferably, the anchor holes of the second set of anchor holes are arranged to extend, when the wind turbine tower is erected, outwards when followed in a downwards direction. Since upper ends of the anchor holes in the second set of anchor holes are located internally of the foundation, the foundation can have a support structure that is cylindrical instead of conical, which simplifies its manufacturing and therefore reduces costs of its production. The invention also allows for a lower end of the tower to connect to the rock flange, again eliminating the need for a conical support structure.

Preferably, where the wind turbine tower is erected, upper ends of the anchor holes in the first set of anchor holes are located externally, i.e. on an external side of the foundation. Preferably, the rock flange has an upper surface, said surface having a first and a second surface portion, said first surface portion having the first set of through anchor holes, and said second surface portion having the second set of through anchor holes, wherein said first and second surface portions form an angle to each other.

An advantage according to the present invention is that the foundation is secured to a larger rock volume compared to prior art solutions having anchors extending only in the vertical direction. Anchors may be introduced into the first and second set of anchor holes, the anchors thus extending along the first and second longitudinal axes forming an angle to each other. Thereby, a more stable and rigid foundation is provided.

A further advantage is that the extension of the rock flange in the radial direction of the tower is smaller compared to the corresponding element in the prior art solutions. Thereby, the design of the rock flange does not affect, or affects to a lower extent, the maximum diameter of the tower. The maximum diameter of the tower is restricted by transport limitations, such as the maximum width being possible to transport on a long distance truck and on the road network. The length of the portion of the foundation protruding outside the boundaries of the lowermost portion of the tower is reduced compared to a similar prior art foundation. Thereby, the diameter of the tower may be maximized without taking consideration to the foundation.

Another advantage is that the height of the rock flange is reduced and no supports are required in order to maintain the stability and the rigidity of the rock flange. As the extension of the rock flange in the radial direction is reduced, the distance between the anchors arranged at the inner and the outer end of the rock flange, respectively, is reduced. Thereby, the torque actuating on the rock flange is reduced. In the prior art solutions, the rock flange had to be reinforced, either by supports or by increasing the height of rock flange, in order to withstand the torque. Further, as the inventive foundation requires no supports, more space for installing the foundation and the anchors is provided. Thereby, forming and installation of the foundation is simplified.

Due to the more compact design of the foundation and that no supports are required, the inventive foundation offers material savings compared to the prior art solutions.

The first longitudinal axis may be perpendicular to the first surface portion, and the second longitudinal axis may be perpendicular to the second surface portion. Thus, when the anchors are introduced in the anchor holes, the force resulting from the tensioned anchors is directed perpendicular to the surface of the first and second surface portion, respectively.

The rock flange may have a circumferential extension corresponding to the circumferential shape of the wind turbine tower. Thereby, the rock flange provides a stable support surface for the wind turbine tower.

The foundation may further comprise a support structure adapted to form an interface to the wind turbine tower, said support structure being attached to the rock flange. The support structure forms a connecting part between the rock flange and the wind turbine tower.

The rock flange may be adapted to form an interface to the wind turbine tower. Thereby, the rock flange is directly attached to the wind turbine tower with no connecting parts.

The rock flange may be adapted to be arranged on a concrete foundation. The concrete foundation provides a steady and rigid foundation for arranging the foundation and compensates for any irregularities in the rock.

The first surface portion may be parallel with an upper surface of the concrete foundation.

The second surface portion may be facing the centre of the wind turbine tower. Thereby, the anchors arranged in the second set of anchors holes are extending outwards in the radial direction from the rock flange into the ground. Consequently, a larger rock volume may be reached by the anchors.

The first and the second sets of anchor holes may be adapted to receive anchors. The anchors are adapted to attach and secure the foundation, and the wind turbine tower attached to the foundation, to the rock.

According to a second aspect, the present invention is realized by a method for forming a foundation for a wind turbine tower, comprising drilling holes in the ground, arranging a rock flange on the ground, said rock flange having a first set of through anchor holes each arranged to extend in a non-zero first angle to, or parallel to, a longitudinal direction of the wind turbine tower when erected, and a second set of through anchor holes each arranged to extend in a non-zero second angle to the longitudinal direction of the wind turbine tower when erected, wherein the first and second angles are different from each other, and wherein upper ends of the anchor holes in the second set of anchor holes are located internally of the foundation, arranging said rock flange with said first and second sets of through anchor holes meshing with said drilled holes, and arranging anchors in said first and second sets of anchor holes.

An advantage of the inventive method is that a more stable and rigid foundation is obtained as the foundation is secured to a larger rock volume compared to prior art solutions having anchors extending in the vertical direction only.

A further advantage is that a foundation being more compact is achieved by the inventive method. The extension of the rock flange in the radial direction of the tower is smaller compared to the corresponding element in the prior art solutions. Thereby, the design of the foundation, and especially the rock flange, does not affect, or affects to a lower extent, the maximum diameter of the tower. The maximum diameter of the tower is restricted by transport limitations, such as the maximum width being possible to transport on a long distance truck and on the road network. The length of the portion of the foundation protruding outside the boundaries of the lowermost portion of the tower is reduced compared to a similar prior art foundation. Thereby, the diameter of the tower may be maximized without taking consideration to the foundation.

Another advantage is that the height of the rock flange is reduced and no supports are required in order to maintain the stability and the rigidity of the rock flange. As the extension of the rock flange in the radial direction is reduced, the distance between the anchors arranged at the inner and the outer end of the rock flange, respectively, is reduced. Thereby, the torque actuating on the rock flange is reduced. In the prior art solutions, the rock flange had to be reinforced, either by supports or by increasing the height of rock flange, in order to withstand the torque. Further, as the inventive foundation has no supports, more space for installing the foundation and the anchors is provided. Thereby, forming and installation of the foundation is simplified.

Due to the more compact design of the support structure and that no supports are required, forming a foundation in accordance with the inventive method offers material savings compared to the prior art solutions.

The method may further comprise forming a concrete foundation on the ground. The concrete foundation provides a steady and rigid foundation for arranging the support structure and compensates for any irregularities in the rock.

The method may further comprise elevating the rock flange from the ground when forming the concrete foundation. When the rock flange is used as a template for drilling the anchor holes in the ground, the rock flange may be elevated from the ground in order to enable forming of the concrete foundation.

The anchors may be arranged before the concrete foundation has been formed.

The method may further comprise fixing the anchors in the ground by an adhesive. Thereby, the foundation is even more firmly attached to the rock.

The rock flange may be used as a template when drilling the holes.

The method may further comprise tensioning the anchors. Thereby, the rock flange is further pressed against the concrete foundation such that a stable foundation is formed.

The method may further comprise arranging the rock flange such that the second surface portion is facing the centre of the wind turbine tower. Thereby, the anchors arranged in the second set of anchors holes are extending outwards in the radial direction from the rock flange into the ground. Consequently, a larger rock volume may be reached by the anchors.

According to a third aspect, the present invention is realized by a rock flange for a wind turbine tower foundation, comprising a first set of through anchor holes each arranged to extend in a non-zero first angle to, or parallel to, a longitudinal direction of the wind turbine tower when erected, and a second set of through anchor holes each arranged to extend in a non-zero second angle to the longitudinal direction of the wind turbine tower when erected, wherein the first and second angles are different from each other.

The rock flange incorporates all the advantages of the inventive foundation, which previously has been discussed, whereby the previous discussion is applicable also for the rock flange.

According to a fourth aspect, the present invention is realized by a wind turbine comprising a foundation according to the first aspect of the present invention. The wind turbine comprising the foundation according to the first aspect of the present invention incorporates all the advantages of the foundation, which previously has been discussed, whereby the previous discussion is applicable also for the wind turbine.

According to a fifth aspect, the present invention is realized by use of a foundation according to the first aspect of the present invention in a wind turbine. Use of the foundation according to the first aspect of the present invention in a wind turbine incorporates all the advantages of the foundation, which previously has been discussed, whereby the previous discussion is applicable also for use of the inventive foundation in a wind turbine.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig 1 schematically illustrates a cross section of a foundation for a wind turbine tower according to one embodiment of the present invention.
Fig 2 schematically illustrates the foundation in fig 1 as seen from above.
Fig 3a schematically illustrates a cross section of a portion of the foundation shown in fig 1.
Fig 3b schematically illustrates a cross section of a portion of the foundation, wherein the wind turbine tower is attached directly to the rock flange.
Fig. 4 schematically illustrates a cross section of a foundation for a wind turbine tower according to another embodiment of the present invention.

### Detailed description of preferred embodiments

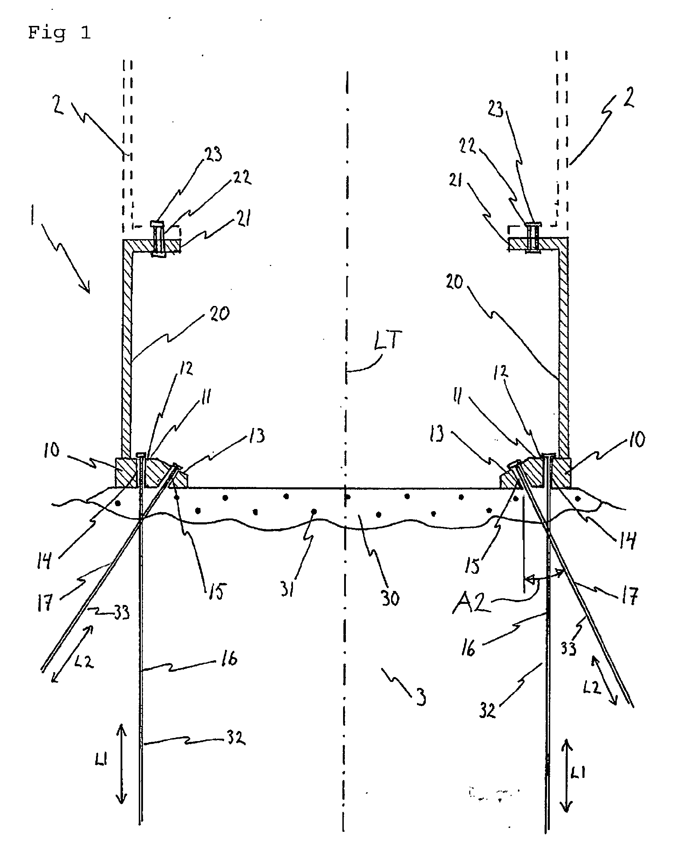

Fig 1 illustrates a foundation 1 for a wind turbine tower 2. The foundation 1 is adapted to engage a lower part of the tower 2 and provide a stable support for the tower 2. The tower 2 may be formed of a plurality of tower segments in the circumferential direction, each forming a portion of the tower 2. In the vertical direction, the tower 2 may be formed of a plurality of tower sections, one tower section being placed on top of the other.

The foundation 1 is especially suitable to be placed on a rock or on rocky grounds.

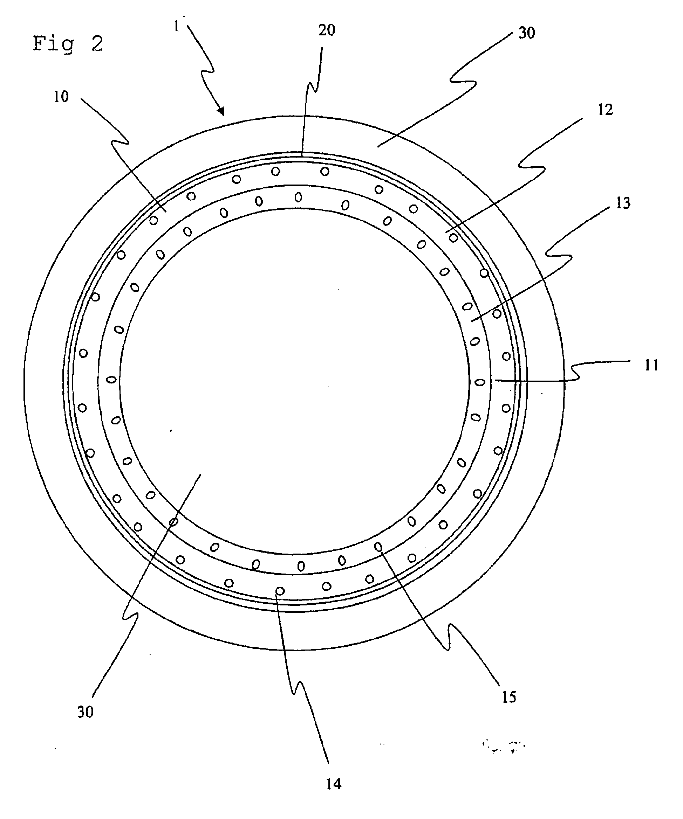

The foundation 1 comprises a rock flange 10. The shape of the rock flange 10 corresponds to the shape of the outer periphery of the tower 2. For example, the rock flange 10 may be annular shaped as shown in fig 2, or have any other shape essentially corresponding to the shape of the tower 2. A plurality of anchors 16, 17 are provided for securing the foundation to the ground 3.

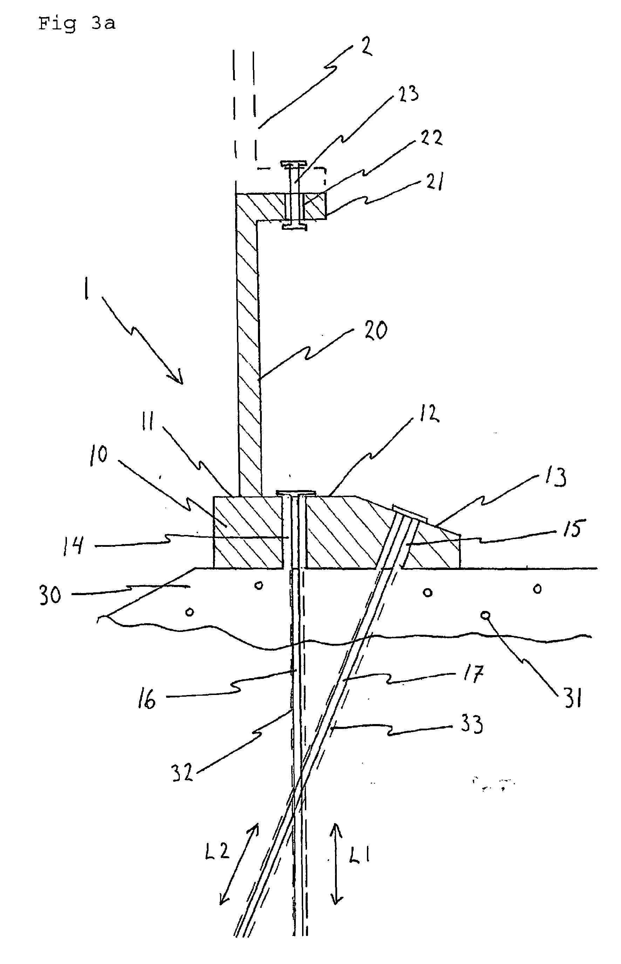

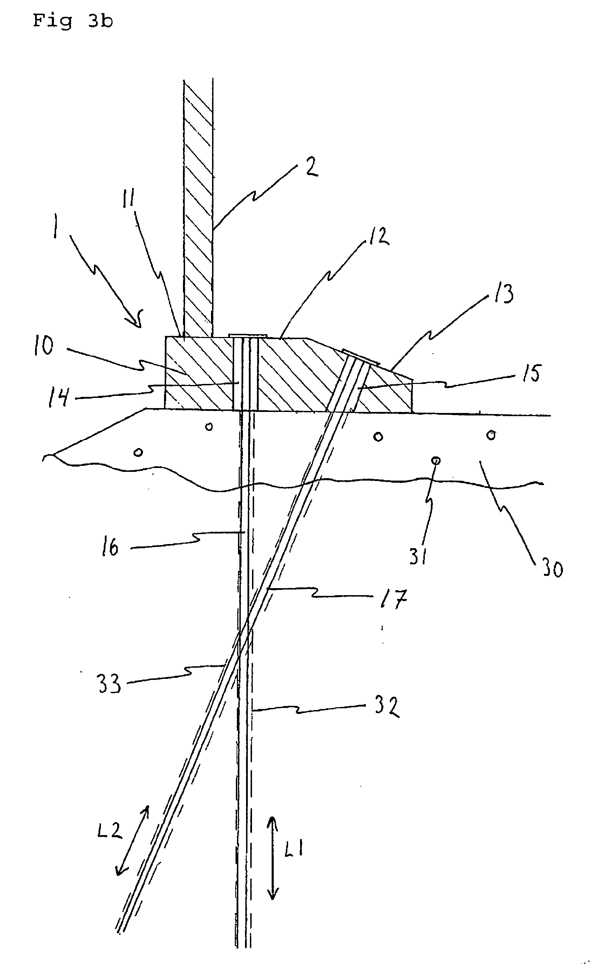

In the embodiment shown in fig 1, the foundation 1 further comprises a support structure 20 being attached to the rock flange 10 and extending in a vertical direction. The support structure 20 has a shape corresponding to the shape of the tower 2. The support structure 20 may be annular shaped. The support structure 20 is adapted to engage and to be attached to the tower 2. The support structure 20 will be described in more detail with reference to fig 3a. In another embodiment, which will be described in more detail with reference to fig 3b, the rock flange 10 is attached directly to the tower 2.

The rock flange 10 is arranged on a concrete foundation 30 formed on the ground or in a cavity in the ground. The concrete foundation 30 may be reinforced with reinforcement bars 31.

Referring to figs 1, 2, 3a and 3b, the rock flange 10 will be described in more detail. The rock flange 10 comprises an upper surface 11 having a first surface portion 12 and a second surface portion 13. The first and the second surface portion 12, 13 form an angle to each other. The first surface portion 12 is parallel with an upper surface of the concrete foundation 30. The second surface portion 13 is facing the centre of the tower 2. The second surface portion 13 is sloping downwardly towards the ground from the first surface portion 12.

The first surface portion 12 is provided with a first set of through anchor holes 14. The second surface portion 13 is provided with a second set of through anchor holes 15. The first and second set of anchor holes 14, 15 are extending through the rock flange 10 and are arranged along the, for example, annular extension of the rock flange 10.

The first set of through anchor holes 14 and the second set of through anchor holes 15 may be displaced in relation to each other in a horizontal plane, as shown in fig 2.

The first and second set of anchor holes 14, 15 are adapted to receive anchors 16, 17 adapted to secure the foundation to the ground 3. Typically, approximately one hundred anchors 16 and corresponding anchor holes 14 may be provided in the first surface portion 12, and approximately one hundred anchors 17 and corresponding anchor holes 15 may be provided in the second surface portion 13 (in fig 2, the number of anchors has been reduced and are shown schematically). Naturally, the number of anchors depends on the diameter of the rock flange 10. The first and second sets of anchor holes 14, 15 may be recessed and adapted to at least partly receive a head of the anchors, such the head of the anchors 16, 17 does not protrude outside the upper surface 11 of the rock flange 10.

The first set of anchor holes 14, extending from the first surface portion 12, extends in a first longitudinal direction L1. The first longitudinal direction L1 may be perpendicular to the first surface portion 12. The second set of anchor holes 15, extending from second surface portion 13, extends in a second longitudinal direction L2. The second longitudinal direction L2 may be perpendicular to the second surface portion 13. Thereby, an angle between the first longitudinal direction L1 and the second longitudinal direction L2 is formed. The angle between the first longitudinal direction L1 and the second longitudinal direction L2 is preferably 5-50°, and more preferably 5-25°. The first longitudinal direction L1 is in this example parallel to a longitudinal direction LT of the wind turbine tower when erected, and the second longitudinal direction L2 is in a non-zero second angle A2 to the longitudinal direction LT of the wind turbine tower.

Anchors 16, 17 are introduced in the first and second set of anchor holes 14, 15 and into pre-drilled holes in the ground 32, 33 extending in the same direction as the first and second set of anchor holes 14, 15, i.e. in the longitudinal directions L1 and L2.

When introducing a first set of anchors 16 in the first set of anchor holes 14, the first set of anchors 16 is guided by the extension of the first set of anchor holes 14. Thereby, the first set of anchors 16 are extending in the first longitudinal direction L1. The second set of anchors 17 are introduced in and guided by the second set of anchor holes 15. The second set of anchors 17 extend outwards from the centre of the tower seen in the radial direction. Thereby, the second set of anchors 17 are extending in the second longitudinal direction L2.

By displacing the first set of anchor holes 14 in relation to the second set of anchor holes 15, the first set of anchors 16 do not interfere with the second set of anchors 17.

By arranging the first set of anchors 16 in the first set of through anchor holes 14 extending along a first longitudinal axis L1, and arranging the second set of anchors 17 in the second set of through anchor holes 15 extending along a second longitudinal axis L2, wherein the first and the second longitudinal axes form an angle to each other, the first and the second sets of anchors form an angle to each other. Thereby, the foundation 1 is connected to a large rock volume, thus improving the stability of the foundation 1.

The rock flange 10 may be made of metal such as steel. As an alternative, the rock flange 10 may be formed of concrete, and may be made integral with the concrete foundation 30.

Referring to fig 3a, the support structure 20 forming an interface to the tower 2 will be described in more detail. The support structure 20 is annular formed and comprises a flange 21 in its upper part. The flange 21 may for example be an L-flange or a T-flange. The flange 21 is adapted to engage a corresponding flange arranged in the tower segment, for example by passing a bolt 23 through a hole 22. The flange 21 comprises a plurality of holes 22 along the annular extension, thereby the tower 2 is firmly attached to the support structure 20 by passing a bolt 23 through each of the holes 22.

Referring to fig 3b, another embodiment of the foundation 1 will be described. In this embodiment, the rock flange 10 is attached to the tower 2. No support structure is arranged between the rock flange 10 and the tower 2.

The inventive foundation may be formed in two alternative ways. In the first way, the inventive method comprises drilling a plurality of holes 32, 33 by using a template showing where the holes are to be placed. The first set of holes 32 are extending along the first longitudinal direction L1 and the second set of holes 33 are extending along the second longitudinal direction L2. After drilling the holes 32, 33, anchors 16, 17 are arranged into the holes 32, 33. The anchors 16, 17 are fixed into the holes 32, 33 by an adhesive and are tensioned. Thereafter, the concrete foundation 30 is formed on the ground, for example in a preformed cavity. Reinforcements 31, if needed, may be arranged in the concrete foundation 30. After forming the concrete foundation 30, the rock flange 10 is placed on the concrete foundation 30 such that the anchor holes 14, 15 of the rock flange 10 are meshing with the drilled holes 32, 33. Finally, the anchors 16, 17 are re-tensioned such that the rock flange 10 is pressed against the concrete foundation 30.

In order to place the rock flange 10 after the anchors 16, 17 have been installed, the second surface portion 13 and its anchor holes 15 must be designed such that it is possible to pass the rock flange 10 over the anchor 17, for example by forming a recess in the rock flange 10 or enlarging the anchor holes 15.

As an alternative to the method previously disclosed, the rock flange 10 itself may be used as a template when drilling the holes 32, 33. Firstly, the rock flange 10 is elevated approximately 10-20 cm over the ground on the place where the foundation 1 is to be located. For example, blocks may be placed under the rock flange 10. In this case, the first and second sets of anchor holes 14, 15 of the rock flange 10 are used for ensuring that the drilled holes 32, 33 in the ground are correctly located. Thereby, the first set of holes 32 is extending along the first longitudinal direction L1 and the second set of holes 33 are extending along the second longitudinal direction L2.

After drilling the holes 32, 33 using the rock flange 10 as a template, the anchors 16, 17 are arranged in the drilled holes 32, 33 and in the anchor holes 14, 15. The anchors 16, 17 are fixed into the holes 32, 33 by an adhesive and are tensioned. After arranging the anchors 16, 17, a concrete foundation 30 can now be formed below the rock flange 10. Reinforcements 31 may be arranged in the concrete foundation 30 in order to reinforce the concrete foundation. After having formed the concrete foundation 30, the rock flange 10 is lowered and placed on the concrete foundation 30. Finally, the anchors 16, 17 are re-tensioned such that the rock flange 10 is pressed against the concrete foundation 30.

For both alternatives of forming the foundation, the tower 2 may be attached to the support structure 20 as previously described. The support structure 20 may already be attached to the rock flange 10, or may be attached to the rock flange 20 after the rock flange 20 has been placed on the concrete foundation 30. Alternatively, the rock flange 20 may be attached directly to the tower 2 with no part there between. For this alternative, the rock flange 20 may already be attached to the tower 2, if it is possible due to transportation restrictions, or the tower 2 is attached to the rock flange 10 when the foundation 1 is formed.

It is contemplated that the support structure providing support for a portion of the tower may be of a different type having a different interface to the tower.

Although an annular rock flange is disclosed in the drawings, the rock flange may have any other shape. Further, it is contemplated that the cross section of the rock flange may have any other form, and that the rock flange may comprise more than two upper surfaces. It is also contemplated that the rock flange may be formed of plurality of rock flange segments in the circumferential direction.

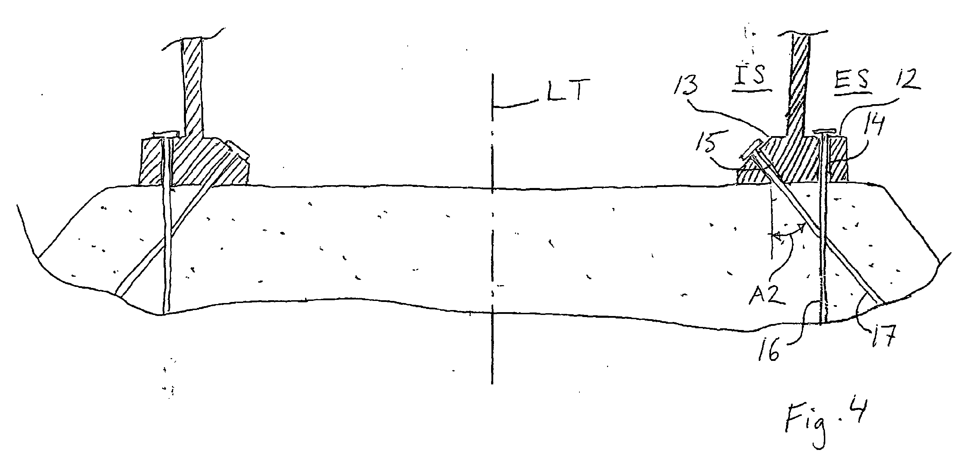

Fig. 4 shows another embodiment of the invention. The foundation comprises a rock flange having a first set of through anchor holes 14 each arranged to extend in parallel to the longitudinal direction LT of the wind turbine tower when erected. A second set of through anchor holes 15 are each arranged to extend in a non-zero second angle A2 to the longitudinal direction LT of the wind turbine tower. The first and second set of anchor holes 14, 15 are adapted to receive anchors 16, 17 adapted to secure the foundation to the ground. As in the embodiment described above, the anchor holes 15 of the second set of anchor holes are arranged to extend outwards when followed in a downwards direction. Upper ends of the anchor holes 14 in the first set of anchor holes are located externally, i.e. on an external side ES of the foundation, and upper ends of the anchor holes 15 in the second set of anchor holes are located internally, i.e. on an internal side IS of the foundation. The rock flange has an upper surface, said surface having a first and a second surface portion 12, 13, said first surface portion having the first set of through anchor holes, and said second surface portion having the second set of through anchor holes. The first and second surface portions 12, 13 form an angle to each other, and first surface portion 12 is located on the external side ES of the foundation, and the second surface portion 13 is located on the internal side IS of the foundation.

It should be noted that alternatively the anchor holes 14 in the first set of through anchor holes could be each arranged to extend in a first angle to the longitudinal direction LT of the wind turbine tower, the first angle being different from the second angle A2. The first angle could be such that the anchor holes 14 of the first set of anchor holes are arranged to extend outwards when followed in a downwards direction, or such that the anchor holes 14 are arranged to extend, inwards when followed in a downwards direction.

The invention has mainly been described above with reference to a few embodiments, as defined by the appended patent claims.

## Claims

1. A foundation for a wind turbine tower, comprising a rock flange having a first set of through anchor holes each arranged to extend in a non-zero first angle to, or parallel to, a longitudinal direction of the wind turbine tower when erected, and a second set of through anchor holes each arranged to extend in a non-zero second angle to the longitudinal direction of the wind turbine tower when erected,
**characterized in that** the first and second angles are different from each other, and wherein upper ends of the anchor holes in the second set of anchor holes are located internally of the foundation.

2. A foundation according to claim 1, wherein the anchor holes of the second set of anchor holes are arranged to extend, when the wind turbine tower is erected, outwards when followed in a downwards direction.

3. A foundation according to any one of the claims 1-2, wherein, where the wind turbine tower is erected, upper ends of the anchor holes in the first set of anchor holes are located externally of the foundation.

4. A foundation according to any one of the claims 1-3, wherein the rock flange has an upper surface, said surface having a first and a second surface portion, said first surface portion having the first set of through anchor holes, and said second surface portion having the second set of through anchor holes, wherein said first and second surface portions form an angle to each other.

5. A foundation according to claim 4, wherein the second surface portion is facing the centre of the wind turbine tower.

6. A foundation according to any one of claims 1-5, further comprising a support structure adapted to form an interface to the wind turbine tower, said support structure being attached to the rock flange.

7. A foundation according to any one of claims 1-5, wherein the rock flange is adapted to form an interface to the wind turbine tower.

8. Method for forming a foundation for a wind turbine tower, comprising
drilling holes in the ground,
arranging a rock flange on the ground, said rock flange having a first set of through anchor holes each arranged to extend in a non-zero first angle to, or parallel to, a longitudinal direction of the wind turbine tower when erected, and a second set of through anchor holes each arranged to extend in a non-zero second angle to the longitudinal direction of the wind turbine tower when erected, wherein the first and second angles are different from each other, and wherein upper ends of the anchor holes in the second set of anchor holes are located internally of the foundation,
arranging said rock flange with said first and second sets of through anchor holes meshing with said drilled holes, and
arranging anchors in said first and second sets of anchor holes.

9. Method according to claim 8, further comprising fixing the anchors in the ground by an adhesive.

10. Method according to any one of claims 8-9, wherein the rock flange is used as a template when drilling the holes.

11. Method according to any one of claims 8-10, further comprising tensioning the anchors.

12. A rock flange for a wind turbine tower foundation, comprising a first set of through anchor holes each arranged to extend in a non-zero first angle to, or parallel to, a longitudinal direction of the wind turbine tower when erected, and a second set of through anchor holes each arranged to extend in a non-zero second angle to the longitudinal direction of the wind turbine tower when erected, **characterized in that** the first and second angles are different from each other, and wherein upper ends of the anchor holes in the second set of anchor holes are located internally of the foundation.

13. A wind turbine comprising a foundation according to any one of claims 1-7.

14. Use of a foundation according to any one of claims 1-7 in a wind turbine.

## Patentansprüche

1. Fundament für einen Windkraftanlagenmast mit einem Steinflansch, der einen ersten Satz von durchgehenden Ankerlöchern, von denen jedes angeordnet ist, um sich in einem ersten von null verschiedenen Winkel zu einer Längsrichtung des Windkraftanlagenmasts oder parallel dazu zu erstrecken, wenn dieser aufgerichtet ist, und einen zweiten Satz von durchgehenden Ankerlöchern aufweist, von denen jedes angeordnet ist, um sich in einem zweiten von null verschiedenen Winkel zu der Längsrichtung des Windkraftanlagenmasts zu erstrecken, wenn dieser aufgerichtet ist, **dadurch gekennzeichnet, dass** sich der erste und zweite Winkel voneinander unterscheiden, und wobei die oberen Enden der Ankerlöcher in dem zweiten Satz von Ankerlöchern innerhalb des Fundaments angeordnet sind.

2. Fundament nach Anspruch 1, wobei die Ankerlöcher des zweiten Satzes von Ankerlöchern angeordnet sind, um sich nach unten betrachtet in Richtung nach außen zu erstrecken, wenn der Windkraftanlagenmast aufgerichtet ist.

3. Fundament nach einem der Ansprüche 1 bis 2, wobei die oberen Enden der Ankerlöcher in dem ersten Satz von Ankerlöchern außerhalb des Fundaments angeordnet sind, wenn der Windkraftanlagenmast aufgerichtet ist.

4. Fundament nach einem der Ansprüche 1 bis 3, wobei der Steinflansch eine obere Oberfläche aufweist, wobei diese Oberfläche einen ersten und einen zweiten Oberflächenabschnitt aufweist, wobei der erste Oberflächenabschnitt den ersten Satz von durchgehenden Ankerlöchern aufweist und der zweite Oberflächenabschnitt den zweiten Satz von durchgehenden Ankerlöchern aufweist, wobei der erste und zweite Oberflächenabschnitt einen Winkel zwischen einander bilden.

5. Fundament nach Anspruch 4, wobei der zweite Oberflächenabschnitt der Mitte des Windkraftanlagenmasts zugewandt ist.

6. Fundament nach einem der Ansprüche 1 bis 5, ferner mit einer Tragstruktur, die angepasst ist, um ein Anschlusselement zu dem Windkraftanlagenmast zu bilden, wobei die Tragstruktur an dem Steinflansch befestigt ist.

7. Fundament nach einem der Ansprüche 1 bis 5, wobei der Steinflansch angepasst ist, um ein Anschlusselement zu dem Windkraftanlagenmast zu bilden.

8. Verfahren zum Bilden eines Fundaments für einen Windkraftanlagenmast mit den folgenden Schritten:
Bohren von Löchern in den Boden,
Anordnen eines Steinflanschs auf dem Boden, wobei der Steinflansch einen ersten Satz von durchgehenden Ankerlöchern, von denen jedes angeordnet ist, um sich in einem ersten von null verschiedenen Winkel zu einer Längsrichtung des Windkraftanlagenmasts oder parallel dazu zu erstrecken, wenn dieser aufgerichtet ist, und einen zweiten Satz von durchgehenden Ankerlöchern aufweist, von denen jedes angeordnet ist, um sich in einem zweiten von null verschiedenen Winkel zu der Längsrichtung des Windkraftanlagenmasts zu erstrecken, wenn dieser aufgerichtet ist, wobei sich der erste und zweite Winkel voneinander unterscheiden und wobei die oberen Enden der Ankerlöcher in dem zweiten Satz von Ankerlöchern innerhalb des Fundaments angeordnet sind,
Anordnen des Steinflanschs so, dass sich der erste und zweite Satz von durchgehenden Ankerlöchern mit den gebohrten Löchern decken, und
Anordnen von Verankerungen in dem ersten und zweiten Satz von Ankerlöchern.

9. Verfahren nach Anspruch 8, ferner umfassend Befestigen der Verankerungen in dem Boden durch Haftmittel.

10. Verfahren nach einem der Ansprüche 8 bis 9, wobei der Steinflansch als Schablone verwendet wird, wenn die Löcher gebohrt werden.

11. Verfahren nach einem der Ansprüche 8 bis 10, ferner umfassend Festziehen der Verankerungen.

12. Steinflansch für ein Fundament eines Windkraftanlagenmasts, mit einem ersten Satz von durchgehenden Ankerlöchern, von denen jedes angeordnet ist, um sich in einem ersten von null verschiedenen Winkel zu einer Längsrichtung des Windkraftanlagenmasts oder parallel dazu zu erstrecken, wenn dieser aufgerichtet ist, und einem zweiten Satz von durchgehenden Ankerlöchern, von denen jedes angeordnet ist, um sich in einem zweiten von null verschiedenen Winkel zu der Längsrichtung des Windkraftanlagenmasts zu erstrecken, wenn dieser aufgerichtet ist, **dadurch gekennzeichnet, dass** sich der erste und zweite Winkel voneinander unterscheiden, und wobei die oberen Enden der Ankerlöcher in dem zweiten Satz von Ankerlöchern innerhalb des Fundaments angeordnet sind.

13. Windkraftanlage mit einem Fundament nach einem der Ansprüche 1 bis 7.

14. Verwendung von einem Fundament nach einem der Ansprüche 1 bis 7 in einer Windkraftanlage.

## Revendications

1. Fondation destinée à une tour d'éolienne, comprenant un socle à inclinaison comportant un premier ensemble de trous d'ancrage traversant, chacun étant disposé en vue de s'étendre suivant un premier angle non nul par rapport, ou parallèle, à une direction longitudinale de la tour d'éolienne lorsqu'elle est érigée, et un second ensemble de trous d'ancrage traversant, chacun étant disposé en vue de s'étendre suivant un second angle non nul par rapport à la direction longitudinale de la tour d'éolienne lorsqu'elle est érigée, **caractérisée en ce que** les premier et second angles sont différents l'un de l'autre, et dans laquelle les extrémités supérieures des trous d'ancrage du second ensemble de trous d'ancrage sont situées à l'intérieur de la fondation.

2. Fondation selon la revendication 1, dans laquelle les trous d'ancrage du second ensemble de trous d'ancrage sont disposés en vue de s'étendre, lorsque la tour d'éolienne est érigée, vers l'extérieur quand ils sont suivis dans une direction descendante.

3. Fondation selon l'une quelconque des revendications 1 à 2, dans laquelle, lorsque la tour d'éolienne est érigée, les extrémités supérieures des trous d'ancrage du premier ensemble de trous d'ancrage sont situées à l'extérieur de la fondation.

4. Fondation selon l'une quelconque des revendications 1 à 3, dans laquelle le socle à inclinaison présente une surface supérieure, ladite surface comportant une première et une seconde parties de surface, ladite première partie de surface comportant le premier ensemble de trous d'ancrage traversant et ladite seconde partie de surface comportant le second ensemble de trous d'ancrage traversant, dans laquelle lesdites première et seconde parties de surface forment un angle l'une par rapport à l'autre.

5. Fondation selon la revendication 4, dans laquelle la seconde partie de surface fait face au centre de la tour d'éolienne.

6. Fondation selon l'une quelconque des revendications 1 à 5 comprenant, de plus, une structure de support adaptée pour former une interface avec la tour d'éolienne, ladite structure de support étant fixée au socle à inclinaison.

7. Fondation selon l'une quelconque des revendications 1 à 5 dans laquelle le socle à inclinaison est adapté pour former une interface avec la tour d'éolienne.

8. Procédé pour former une fondation destinée à une tour d'éolienne comprenant le fait de :
creuser des trous dans le sol,
disposer un socle à inclinaison sur le sol, ledit socle à inclinaison comportant un premier ensemble de trous d'ancrage traversant, chacun étant disposé en vue de s'étendre suivant un premier angle non nul par rapport, ou parallèle, à une direction longitudinale de la tour d'éolienne lorsqu'elle est érigée, et un second ensemble de trous d'ancrage traversant, disposés, chacun pour s'étendre suivant un second angle non nul par rapport à la direction longitudinale de la tour d'éolienne lorsque celle-ci est érigée, dans lequel les premier et second angles sont différents l'un de l'autre et dans lequel les extrémités supérieures des trous d'ancrage du second ensemble de trous d'ancrage sont situées à l'intérieur de la fondation,
disposer ledit socle à inclinaison comportant lesdits premier et second ensembles de trous d'ancrage traversant de façon à ce qu'ils s'engagent avec lesdits trous creusés, et
disposer les éléments d'ancrage dans lesdits premier et second ensembles de trous d'ancrage.

9. Procédé selon la revendication 8 comprenant, de plus, le fait de fixer les éléments d'ancrage dans le sol à l'aide d'un adhésif.

10. Procédé selon l'une quelconque des revendications 8-9, dans lequel le socle à inclinaison est utilisé en tant qu'un gabarit lors du perçage des trous.

11. Procédé selon l'une quelconque des revendications 8-10 comprenant, de plus, de mettre en tension les éléments d'ancrage.

12. Socle à inclinaison destiné à une fondation de tour d'éolienne comprenant un premier ensemble de trous d'ancrage traversant, chacun étant disposé de façon à s'étendre suivant un premier angle non nul par rapport , ou parallèle à une direction longitudinale de la tour d'éolienne lorsque celle-ci est érigée, et un second ensemble de trous d'ancrage traversant, chacun étant disposé de façon à s'étendre suivant un second angle non nul par rapport à la direction longitudinale de la tour d'éolienne lorsque celle-ci est érigée, **caractérisé en ce que** les premier et second angles sont différents l'un de l'autre, et dans laquelle les extrémités extérieures des trous d'ancrage du second ensemble de trous d'ancrage sont situées à l'intérieur de la fondation.

13. Eolienne comportant une fondation selon l'une quelconque des revendications 1 à 7.

14. Utilisation d'une fondation selon l'une quelconque des revendications 1 à 7 dans une éolienne.
